# EUROPEAN PATENT APPLICATION

(11) **EP 4 764 476 A1**
(43) Date of publication of application: **24.06.2026**
(21) Application number: 25837694.6
(22) Date of filing: 08.07.2025
(51) Int. Cl.: G01N 23/046, G01N 23/18, G06T 7/00, G06T 11/00, H01M 10/42

(54) **BATTERY IMAGE ANALYSIS DEVICE AND OPERATION METHOD THEREOF**

(30) Priority: 08.07.2024 KR 20240089434
(71) Applicant: LG Energy Solution, Ltd., Seoul 07335 (KR)
(72) Inventor: JANG, Dong Hyuk, Daejeon 34122 (KR); LEE, Byeong Joon, Daejeon 34122 (KR)
(74) Representative: Goddar, Heinz J.
(86) International application number: PCT/KR2025/009812
(87) International publication number: WO 2026/014863

(57) **Abstract**

A battery image analysis device according to an embodiment disclosed herein may include an acquisition unit configured to acquire a first image of a battery including an electrode assembly and a case protecting the electrode assembly, a target extraction unit configured to extract a target image corresponding to a target component among components of the battery included in the first image based on pixel values of a plurality of pixels included in the first image, a centerline extraction unit configured to extract a centerline of the target component included in the target image, and a calculation unit configured to extract coordinate data of each of the centerline and the case, and calculate a proportion of the case occupied by the electrode assembly based on the coordinate data of the centerline and the coordinate data of the case.

## Description

### TECHNICAL FIELD

### Cross-reference to Related Applications

This application claims priority from Korean Patent Application No. 10-2024-0089434, filed on July 8, 2024, the disclosure of which is incorporated by reference herein.

### Technical Field

Embodiments disclosed herein relate a battery image analysis device and a method of operating the same.

### BACKGROUND ART

In recent years, research and development for secondary batteries have been actively conducted. Here, the secondary battery is a battery capable of recharging and discharging, and in its meaning, includes all of the existing Ni/Cd battery, Ni/MH battery, and the like and a recent lithium-ion battery. Among secondary batteries, the lithium-ion battery has the advantage of having a much higher energy density than the existing Ni/Cd battery, Ni/MH battery, and the like. In addition, since the lithium-ion battery may be manufactured to be small and lightweight, the lithium-ion battery is used as a power source for mobile devices, and in recent years, its scope of use has expanded to include power sources for electric vehicles, so that the lithium-ion battery attracts attention as a next-generation energy storage medium.

According to the shape of a battery case, secondary batteries are classified into cylindrical batteries in which an electrode assembly is embedded into a cylindrical metal can, prismatic batteries in which the electrode assembly is embedded in a prismatic metal can, and pouch-type batteries in which the electrode assembly is embedded into a pouch-type case made of aluminum laminate sheet. Among them, the cylindrical batteries have advantages in that they have relatively large capacity and structural stability.

The electrode assembly embedded into the battery case is a rechargeable power generating element having a stacked structure of a positive electrode/a separator/a negative electrode, and is classified into a jelly roll type, a stack type, and a stack/folding type. The jelly roll type is a structure in which a separator is interposed between long sheet-shaped positive and negative electrodes coated with active materials and they are wound, the stack type is a structure in which a number of positive and negative electrodes of a predetermined size are sequentially stacked with a separator interposed therebetween, and the stack/folding type is a composite structure of the jelly roll type and the stack type. Among them, the jelly roll-type electrode assembly has advantages in that it is easy to manufacture and has a high energy density per weight.

### DISCLOSURE OF THE INVENTION

### TECHNICAL PROBLEM

The presence or absence of a defect in such a cylindrical battery may be determined by analyzing an image obtained by imaging the inside of the battery (e.g., a computed tomography (CT) image). However, in the related art, since engineers individually determine the image and adjust contrast values or the like to extract and analyze electrode images (e.g., a positive electrode image and/or a negative electrode image), there is a problem in that the efficient is low in terms of analysis time and analysis accuracy.

In addition, as charging and discharging of the battery are repeated, the size and/or position of an electrode assembly inside the battery may change, and verifying this requires disassembling the battery and directly measuring the length of the electrode assembly, which is problematic.

The technical problems of the embodiments disclosed herein are not limited to those mentioned above, and other objectives not mentioned will be clearly understood by those skilled in the art from the following descriptions.

### TECHNICAL SOLUTION

According to an embodiment disclosed herein, a battery image analysis device may include an acquisition unit configured to acquire a first image of a battery including an electrode assembly and a case protecting the electrode assembly, a target extraction unit configured to extract a target image corresponding to a target component among components of the battery included in the first image based on pixel values of a plurality of pixels included in the first image, a centerline extraction unit configured to extract a centerline of the target component included in the target image, and a calculation unit configured to extract coordinate data of each of the centerline and the case, and calculate a proportion of the case occupied by the electrode assembly based on the coordinate data of the centerline and the coordinate data of the case.

In an embodiment, the proportion may include at least one of an area proportion of an area of the electrode assembly corresponding to a first cross-section of the case relative to an area of the first cross-section and a volume proportion of a volume of the electrode assembly relative to a volume of the case.

In an embodiment, the target component may include a positive electrode included in the electrode assembly, and the calculation unit may calculate the proportion based on an outermost centerline corresponding to an outermost one of the positive electrode among the centerlines.

In an embodiment, the acquisition unit may further acquire a distance between a negative electrode and the positive electrode of the battery, and the calculation unit may calculate the proportion based on the outermost centerline and the distance.

In an embodiment, the calculation unit may be configured to specify a position of the negative electrode of the battery based on the outermost centerline and the distance, extract coordinate data of the specified negative electrode, and calculate the proportion based on the coordinate data of the negative electrode and the coordinate data of the case.

In an embodiment, the battery image analysis device may further include a diagnostic unit configured to diagnose a state of the battery based on the proportion.

According to an embodiment disclosed herein, a method of operating a battery image analysis device may include acquiring a first image of a battery including an electrode assembly and a case protecting the electrode assembly, extracting a target image corresponding to a target component among components of the battery included in the first image based on pixel values of a plurality of pixels included in the first image, extracting a centerline of the target component included in the target image, and extracting coordinate data of each of the centerline and the case, and calculate a proportion of the case occupied by the electrode assembly based on the coordinate data of the centerline and the coordinate data of the case.

In an embodiment, the proportion may include at least one of an area proportion of an area of the electrode assembly corresponding to a first cross-section of the case relative to an area of the first cross-section and a volume proportion of a volume of the electrode assembly relative to a volume of the case.

In an embodiment, the target component may include a positive electrode included in the electrode assembly, and the calculating of the proportion may include calculating the proportion based on an outermost centerline corresponding to an outermost one of the positive electrode among the centerlines.

In an embodiment, the method may further include acquiring a distance between a negative electrode and the positive electrode of the battery, and the calculating of the proportion may include calculating the proportion based on the outermost centerline and the distance.

In an embodiment, the calculating of the proportion may include specifying a position of the negative electrode of the battery based on the outermost centerline and the distance, extracting coordinate data of the specified negative electrode, and calculating the proportion based on the coordinate data of the negative electrode and the coordinate data of the case.

In an embodiment, the method may further include diagnosing a state of the battery based on the proportion.

### ADVANTAGEOUS EFFECTS

According to the embodiments disclosed herein, the time required to analyze an image of a battery can be reduced.

According to the embodiments disclosed herein, image analysis errors regarding batteries can be reduced by minimizing engineer intervention.

According to the embodiments disclosed herein, since the area or volume of an electrode assembly can be calculated through an image of a battery, the state of the battery can be diagnosed without disassembling the battery.

The effects of the battery image analysis device and the method of operating the same according to the disclosure herein are not limited to the effects mentioned above, and other effects not mentioned will be clearly understood by those skilled in the art according to the disclosure herein.

### BRIEF DESCRIPTION OF THE DRAWINGS

FIG. 1 is a cross-sectional view of a cylindrical secondary battery including a jelly roll-type electrode assembly.
FIG. 2 is a block diagram of a battery image analysis device according to an embodiment.
FIGS. 3a to 3d are views for describing a method of extracting the outermost centerline of a positive electrode through a first image of a battery by the battery image analysis device according to an embodiment.
FIGS. 4a to 4d are views for describing a method of extracting coordinate data of a battery case by the battery image analysis device according to an embodiment.
FIG. 5 is an image of the inside of a battery reconstructed based on an image extracted by the battery image analysis device according to an embodiment.
FIG. 6 is an enlarged view of a portion of the reconstructed image of FIG. 5.
FIG. 7 is a flowchart showing a method of operating the battery image analysis device according to an embodiment.
FIG. 8 illustrates a computing system for executing operations of a battery image analysis device according to an embodiment.

With respect to the description of the drawings, the same or similar reference signs may be used for the same or similar elements.

### MODE FOR CARRYING OUT THE INVENTION

Hereinafter, embodiments of the present invention will be described with reference to the accompanying drawings. However, this is not intended to limit the present invention to the specific embodiments, and it is to be construed to include various modifications, equivalents, and/or alternatives of embodiments of the present invention.

It should be appreciated that embodiments of the present disclosure and the terms used therein are not intended to limit the technological features set forth herein to a particular embodiment and include various changes, equivalents, or replacements in corresponding embodiments. With regard to the description of the drawings, similar or related reference numerals may be used to refer to similar or related elements. It is to be understood that a singular form of a noun corresponding to an item may include one or more of the things, unless the relevant context clearly indicates otherwise.

As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," "first," "second," "A." "B," "(a)," or "(b)" may be used to simply distinguish a corresponding component from another, and do not limit the components in other aspects (e.g., importance or order) unless specifically stated otherwise.

In the present specification, it is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the plurality of entities may be disposed separately from other components. According to embodiments disclosed herein, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

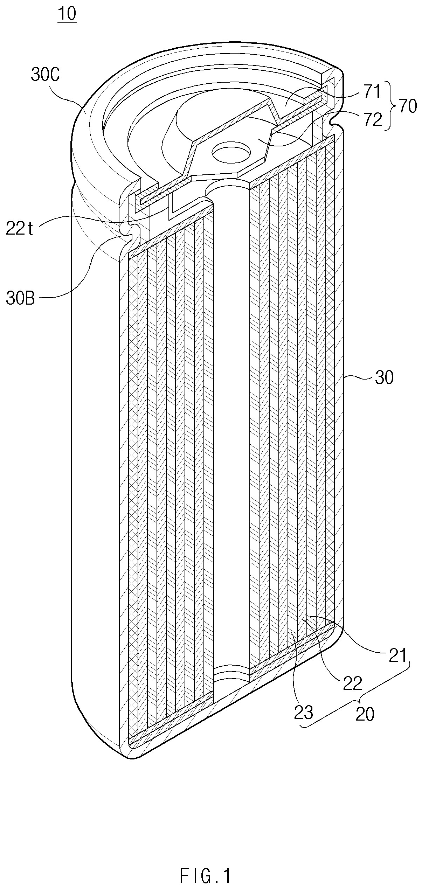

FIG. 1 is a cross-sectional view of a cylindrical secondary battery including a jelly roll-type electrode assembly.

Referring to FIG. 1, a cylindrical secondary battery 10 may be manufactured by housing a jelly roll-type electrode assembly 20 in which a negative electrode 21, a positive electrode 22, and a separator 23 are wound, in a cylindrical battery case 30, injecting an electrolyte into the battery case 30, and then coupling a cap assembly 70 to an upper end of the battery case 30.

The cap assembly 70 may include an upper cap 71 that forms a positive electrode terminal and a cap plate 72 that is in close contact with the upper cap 71. A positive electrode tab 22t extended from the positive electrode 22 may be connected to the cap plate 72, so that the upper cap 71 may function as the positive electrode terminal.

In order to ensure stable coupling of the cap assembly 70 and prevent movement of the electrode assembly 20, a beading portion 30B and a crimping portion 30C may be formed in the battery case 30.

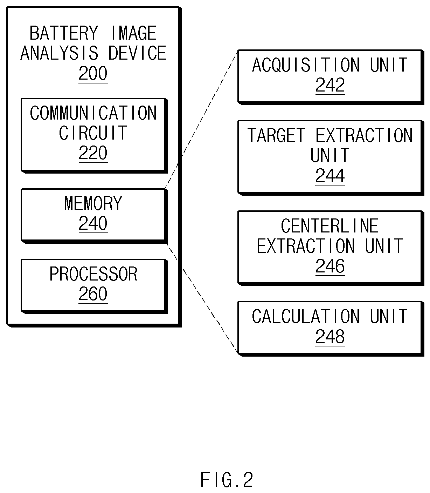

FIG. 2 is a block diagram of a battery image analysis device according to an embodiment.

Referring to FIG. 2, a battery image analysis device 200 may include a communication circuit 220, a memory 240, and a processor 260. According to the embodiment, the battery image analysis device 200 illustrated in FIG. 2 may further include at least one component (e.g., a display, an input device, or an output device) other than the components illustrated in FIG. 2.

The communication circuit 220 may establish a wired communication channel and/or a wireless communication channel between the battery image analysis device 200 and an external electronic device (e.g., an imaging device), and may transmit and receive data to and from the external electronic device through the established communication channel.

In an embodiment, the communication circuit 220 may acquire an image of a battery (e.g., a cylindrical battery) from the external electronic device. Here, the image of the battery may include a non-destructive computed tomography (CT) image and an X-ray image, and may include an image obtained by actually disassembling the battery and imaging a cross section.

In an embodiment, the communication circuit 220 may acquire information related to the jelly roll-type electrode assembly from the external electronic device. Here, the information related to the electrode assembly may include the distance between the positive electrode and the negative electrode. The distance between the positive electrode and the negative electrode may be information based on manufacturing specifications set in advance during a battery manufacturing process, or may be information based on a distance directly measured between the positive and negative electrodes after disassembling a normal battery.

The memory 240 may include a volatile memory or a non-volatile memory.

In an embodiment, the memory 240 may store data used by at least one component (e.g., the processor 260) of the battery image analysis device 200. For example, data may include software (or instructions related thereto), input data, or output data. In an embodiment, the instructions, when executed by the processor 260, may cause the battery image analysis device 200 to perform operations defined by the instructions.

In an embodiment, the memory 240 may include one or more pieces of software (e.g., an acquisition unit 242, a target extraction unit 244, a centerline extraction unit 246, a calculation unit 248, or a combination thereof).

The processor 260 may include a central processing unit, an application processor, a graphics processing unit, a neural processing unit (NPU), an image signal processor, a sensor hub processor, or a communication processor.

In an embodiment, the processor 260 may execute software stored in the memory 240 (e.g., the acquisition unit 242, the target extraction unit 244, the centerline extraction unit 246, the calculation unit 248, or a combination thereof) to control at least one other component (e.g., a hardware or software component) of the battery image analysis device 200 connected to the processor 260 and perform various data processing or calculations.

Hereinafter, a method for analyzing an image of a battery through the components included in the battery image analysis device 200 is described. In addition, for convenience of description, the following description assumes that the image of the battery is a CT image obtained by imaging the inside of the battery using a computed tomography machine, and assumes that the battery is a cylindrical battery including a jelly roll-type electrode assembly and a case (e.g., a cylindrical metal can) for protecting the electrode assembly.

The battery image analysis device 200 may include the acquisition unit 242, the target extraction unit 244, the centerline extraction unit 246, and the calculation unit 248.

The acquisition unit 242 may acquire a first image of a battery. Here, the first image may include a two-dimensional image obtained by imaging a cross-section of the battery and a three-dimensional image obtained by imaging a three-dimensional structure of the battery. The first image may include one or more CT images obtained by imaging the inside of the battery depending on one or more imaging conditions. CT images may have different brightness and/or sizes depending on the specifications of a CT scanner and the imaging environments, and the first image may include CT images obtained using a plurality of CT scanners based on various imaging conditions.

In an embodiment, the acquisition unit 242 may acquire information related to the jelly roll-type electrode assembly. Here, the information related to the electrode assembly may include the distance between the positive electrode and the negative electrode, and the distance between the positive electrode and the negative electrode may be information based on manufacturing specifications set in advance during the battery manufacturing process.

The target extraction unit 244 may extract a target image corresponding to a target component from the first image. The target extraction unit 244 may extract the target image (e.g., a positive electrode image) corresponding to the target component (e.g., the positive electrode) among the components (e.g., the positive electrode, the negative electrode, the separator, and the case) of the battery included in the first image based on pixel values of a plurality of pixels included in the first image.

In an embodiment, the target extraction unit 244 may extract the target image from the first image based on pixel values of the plurality of pixels included in the first image. In an embodiment, the target extraction unit 244 may extract the target image based on at least one pixel having a pixel value greater than or equal to a threshold value among the plurality of pixels included in the first image. For example, the target extraction unit 244 may extract the target image by adjusting, to zero, pixel values of all pixels except at least one pixel in the first image. In another embodiment, the target extraction unit 244 may extract the target image by adjusting the pixel value of the at least one pixel in the first image to a first pixel value and the pixel values of the remaining pixels to a second pixel value different from the first pixel value.

In an embodiment, the target extraction unit 244 may extract an image of each of the case and the positive electrode among the components (e.g., the electrode assembly and the case) that constitute the battery. The reason why the target extraction unit 244 extracts the images corresponding to the case and the positive electrode may be to calculate a proportion of the case occupied by the electrode assembly using the calculation unit 248 described below. The target extraction unit 244 may extract a case image corresponding to the case from the first image. The target extraction unit 244 may extract a positive electrode image corresponding to the positive electrode from the first image. The reason why the target extraction unit 244 extracts the positive electrode image corresponding to the positive electrode among the components (e.g., the positive electrode, the negative electrode, and the separator) included in the electrode assembly in the first image is that it may be easiest to identify the positive electrode in the first image.

The centerline extraction unit 246 may extract a centerline of the target component included in the target image. The centerline extraction unit 246 may extract the centerline of the target component from the target image using a skeleton extraction technique. Here, the skeleton extraction technique may refer to an image processing technique that extracts a skeleton corresponding to the centerline of a specific region of an image. In this case, various existing methods may be used to extract the skeleton, such as the thinning algorithm and the medial axis transform (MAT) algorithm.

According to an embodiment, the centerline extraction unit 246 may perform blurring on the target image and then extract the centerline of the target component from the blurred target image using the skeleton extraction technique. For example, the centerline extraction unit 246 may perform blurring by adjusting the pixel values of the surrounding pixels of a specific pixel among the pixels having the second pixel value in a partial region of the target image, so that the values decrease as the pixels are further away from the specific pixel. Here, the blurred pixels may have pixel values that decrease as the pixels are further away from the specific pixel. Then, the centerline extraction unit 246 may extract the skeleton of the blurred pixels using the skeleton extraction technique. For example, the centerline extraction unit 246 may extract the pixel having the highest pixel value among the blurred pixels as the skeleton. The centerline extraction unit 246 may extract the centerline of the target component from the target image by extracting the centerline for all parts of the target component based on at least one of the aforementioned methods.

The calculation unit 248 may extract coordinate data of each of the centerline of the target component and the case. Here, the coordinate data may include coordinates based on a two-dimensional or three-dimensional coordinate system, and the coordinates may be expressed based on Cartesian coordinates or polar coordinates. By specifying a center point of the electrode assembly as the origin, each of pixels corresponding to the centerline of the target component and pixels corresponding to the case based on the origin may be expressed as a plane coordinate of an x-axis component and a y-axis component.

The calculation unit 248 may calculate a proportion of the case occupied by the electrode assembly based on the coordinate data of the centerline and the coordinate data of the case. Here, the proportion may include at least one of an area proportion and a volume proportion. The area proportion may be the proportion of the area of the electrode assembly corresponding to a first cross-section of the three-dimensional case, where the first cross-section is defined at a height specified relative to the ground, relative to the internal area of the case at the first cross-section. The volume proportion may be the proportion of the volume of the electrode assembly relative to an internal volume of the case.

In an embodiment, the calculation unit 248 may calculate the proportion based on an outermost centerline corresponding to an outermost one of centerlines of the positive electrode corresponding to the target component. For example, when calculating the area proportion, the calculation unit 248 may calculate the area proportion based on the area of the first cross-section of the three-dimensional cylindrical case and the area based on the outermost centerline corresponding to the outermost one of the positive electrode among the centerlines of the positive electrode corresponding to the first cross-section. Specifically, the calculation unit 248 may extract coordinate data of each of pixels from the case image corresponding to the first cross-section extracted through the target extraction unit 244, calculate the distance between the center point of the case corresponding to the first cross-section and each pixel, and integrate the calculated distance to calculate the internal area of the case. Likewise, the calculation unit 248 may extract coordinate data of the outermost centerline among the centerlines of the positive electrode corresponding to the first cross-section extracted through the target extraction unit 244 and the centerline extraction unit 246, calculate the distance between the center point of the outermost centerline corresponding to the first cross-section and each of the pixels constituting the outermost centerline, and integrate the calculated distance to calculate the area of the electrode assembly. Here, the center point may be selected based on the average of the x-axis components and the y-axis components of the plane coordinates of the pixels of the case corresponding to the first cross-section, and may also be selected based on the manufacturing specifications (e.g., a diameter and material of the case, or the like) set in advance during the battery manufacturing process.

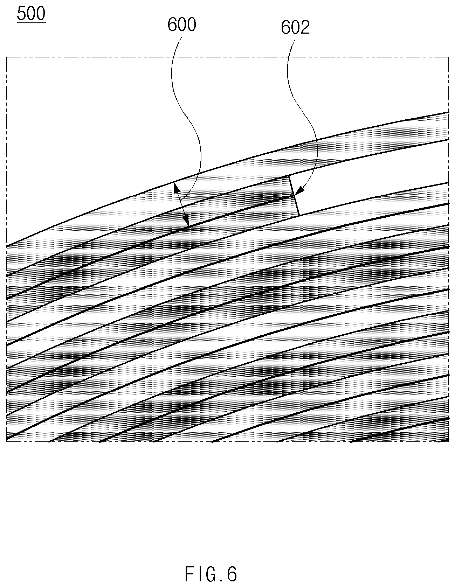

In an embodiment, the calculation unit 248 may calculate the proportion of the case occupied by the electrode assembly based on the outermost centerline of the positive electrode centerlines and the distance between the negative electrode and the positive electrode of the battery. The details of how the calculation unit 248 calculates the proportion based on the outermost centerline of the positive electrode centerlines and the distance between the negative electrode and the positive electrode are described below in FIG. 6.

The battery image analysis device 200 may further include a diagnostic unit (not shown).

The diagnostic unit (not shown) may diagnose the state of the battery based on the proportion calculated from the calculation unit 248. For example, as charging and discharging of the battery are repeated, the electrode assembly repeatedly expands and contracts, and the shape of the electrode assembly may be deformed as these charge and discharge cycles continue. When the jelly roll-type electrode assembly expands abnormally due to heat generated inside the battery, the proportion of the case occupied by the electrode assembly may exceed a preset normal range. In this case, the diagnostic unit (not shown) may diagnose the battery as abnormal.

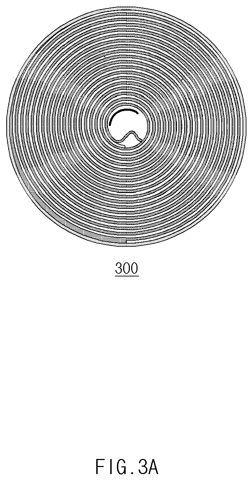

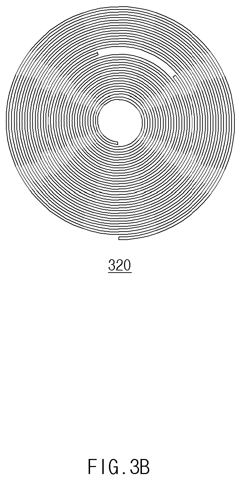

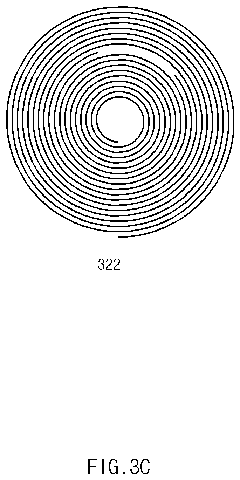

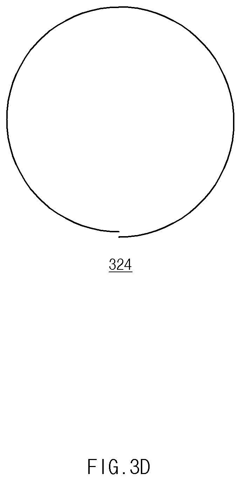

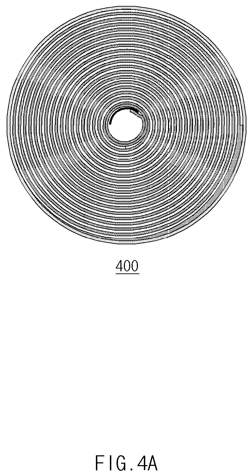

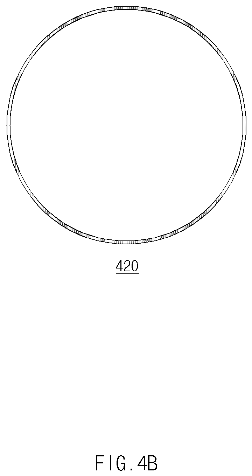

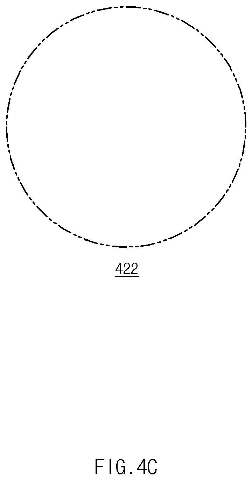

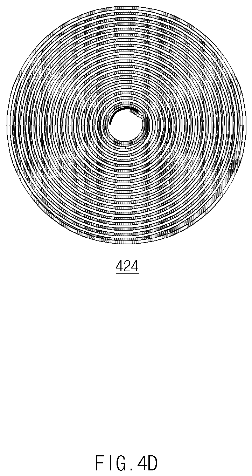

FIGS. 3a to 3d are views for describing a method of extracting the outermost centerline of a positive electrode through a first image of a battery by the battery image analysis device according to an embodiment. FIGS. 4a to 4d are views for describing a method of extracting coordinate data of a battery case by the battery image analysis device according to an embodiment.

Referring to FIGS. 3a to 3d, the battery image analysis device 200 may acquire a first image 300. Here, the first image 300 may be a CT image obtained by imaging a first cross-section of the battery corresponding to a specified height from the ground.

The battery image analysis device 200 may extract a positive electrode image 320 corresponding to the positive electrode from the first image 300. The battery image analysis device 200 may extract centerlines 322 of the positive electrode from the positive electrode image 320. The battery image analysis device 200 may extract an outermost centerline 324 corresponding to an outermost one among the centerlines 322 of the positive electrode. The battery image analysis device 200 may extract coordinate data based on the centerlines 322 of the positive electrode.

Referring to FIGS. 4a to 4d, the battery image analysis device 200 may acquire a first image 400. Here, the first image 400 may be a CT image obtained by imaging a first cross-section of the battery corresponding to a specified height from the ground.

The battery image analysis device 200 may extract, from the first image 400, a case image 420 of a case for protecting the electrode assembly. The battery image analysis device 200 may extract a centerline 422 of the case from the case image 420. The battery image analysis device 200 may extract coordinate data 424 based on the centerline 422 of the case.

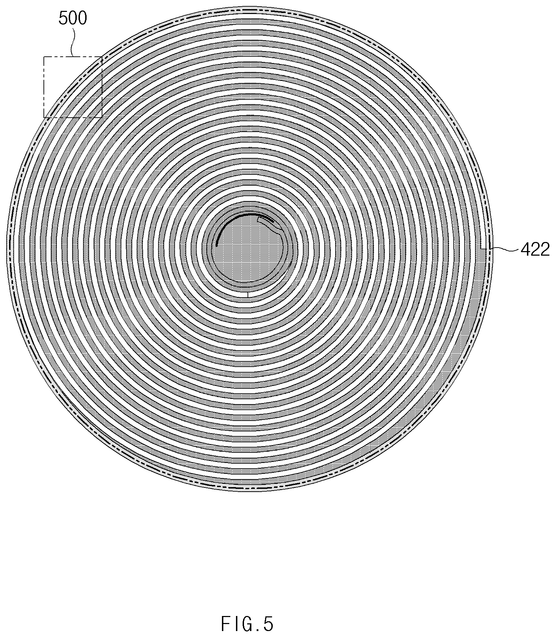

FIG. 5 is an image of the inside of a battery reconstructed based on an image extracted by the battery image analysis device according to an embodiment. FIG. 6 is an enlarged view of a portion of the reconstructed image of FIG. 5. Hereinafter, a method for specifying an outermost portion of an electrode assembly by the battery image analysis device 200 will be described with reference to FIGS. 5 and 6 together.

Referring to FIG. 5, the reconstructed image may include a centerline 422 of a positive electrode.

FIG. 6 may include a portion 602 of the centerline 422 of the positive electrode of FIG. 5. The battery image analysis device 200 may specify an outermost portion of the electrode assembly by adding a distance 600 between the positive and negative electrodes to each of pixels included in the portion 602 of the centerline 422 of the positive electrode. The outermost portion of the electrode assembly may be a configuration corresponding to the negative electrode, and since the negative electrode is difficult to identify in the first image, the battery image analysis device 200 may specify the outermost portion of the negative electrode by adding the distance between the positive electrode and the negative electrode based on the outermost portion of the positive electrode.

In an embodiment, the battery image analysis device 200 may calculate the area of the electrode assembly based on the coordinate data of the specified outermost portion of the negative electrode. The battery image analysis device 200 may calculate the area proportion based on the calculated area of the electrode assembly.

In another embodiment, the battery image analysis device 200 may calculate the volume of the electrode assembly based on the coordinate data of the specified outermost portion of the negative electrode. The battery image analysis device 200 may calculate the volume proportion based on the calculated volume of the electrode assembly.

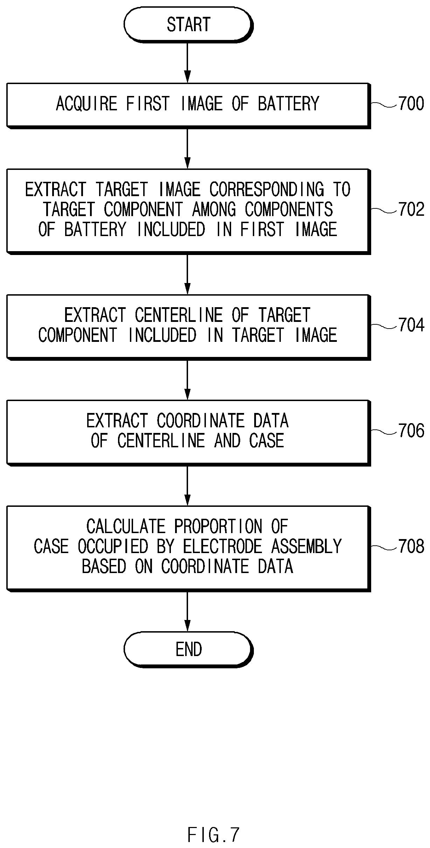

FIG. 7 is a flowchart showing a method of operating the battery image analysis device according to an embodiment.

Referring to FIG. 7, in operation 700, the battery image analysis device 200 may acquire a first image of a the battery.

In an embodiment, the battery image analysis device 200 may acquire information related to a jelly roll-type electrode assembly.

In operation 702, the battery image analysis device 200 may extract a target image corresponding to a target component from the first image. The battery image analysis device 200 may extract the target image (e.g., a positive electrode image) corresponding to the target component (e.g., the positive electrode) among the components (e.g., the positive electrode, the negative electrode, the separator, and the case) of the battery included in the first image based on pixel values of a plurality of pixels included in the first image.

In an embodiment, the battery image analysis device 200 may extract the target image from the first image based on pixel values of the plurality of pixels included in the first image. In an embodiment, the battery image analysis device 200 may extract the target image based on at least one pixel having a pixel value greater than or equal to a threshold value among the plurality of pixels included in the first image.

In operation 704, the battery image analysis device 200 may extract a centerline of the target component included in the target image. The battery image analysis device 200 may extract the centerline of the target component from the target image using a skeleton extraction technique. Here, the skeleton extraction technique may refer to an image processing technique that extracts a skeleton corresponding to the centerline of a specific region of an image. In this case, various existing methods may be used to extract the skeleton, such as the thinning algorithm and the medial axis transform (MAT) algorithm.

According to an embodiment, the battery image analysis device 200 may perform blurring on the target image and then extract the centerline of the target component from the blurred target image using the skeleton extraction technique.

In operation 706, the battery image analysis device 200 may extract coordinate data of each of the centerline of the target component and the case.

In operation 708, the battery image analysis device 200 may calculate a proportion of the case occupied by the electrode assembly based on the coordinate data of the centerline and the coordinate data of the case.

In an embodiment, the battery image analysis device 200 may calculate the proportion based on an outermost centerline corresponding to an outermost one of centerlines of the positive electrode corresponding to the target component.

In an embodiment, the battery image analysis device 200 may calculate the proportion of the case occupied by the electrode assembly based on the outermost centerline of the positive electrode centerlines and the distance between the negative electrode and the positive electrode of the battery.

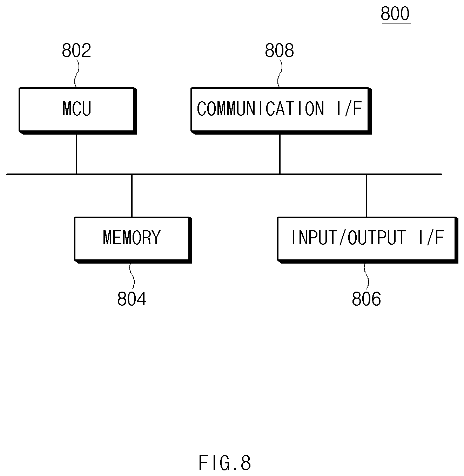

FIG. 8 illustrates a computing system for executing operations of a battery image analysis device according to an embodiment.

Referring to FIG. 8, a computing system 800 according to an embodiment disclosed herein may include a microcontroller unit (MCU) 802, a memory 804, an input/output interface (I/F) 806, and a communication I/F 808.

The MCU 802 may be a processor that executes various programs (e.g., a battery image analysis program) stored in the memory 804, processes various data from the programs, and performs functions of the battery image analysis device 200 shown in FIGS. 1 to 7 described above.

The memory 804 may store various programs related to the operations of the battery image analysis device 200. In addition, the memory 804 may store operating data of the battery image analysis device 200.

A plurality of memories 804 may be provided as needed. The memory 804 may be a volatile memory or non-volatile memory. As the volatile memory, the memory 804 may be a random-access memory (RAM), dynamic RAM (DRAM), static RAM (SRAM), or the like. As the non-volatile memory, for the memory 804, a read-only memory (ROM), a programmable ROM (PROM), an electrically alterable ROM (EAROM), an erasable programmable ROM (EPROM), an electrically erasable programmable ROM (EEPROM), a flash memory, or the like may be used. The memories 804 listed above are only exemplary and are not limited to the examples.

The input/output I/F 806 may provide an interface that connects an input device (not shown) such as a keyboard, a mouse, a touch panel, or the like, and an output device such as a display (not shown), to the MCU 802 to enable data transmission and reception.

The communication I/F 808 is a component that may transmit and receive various data to and from the server, and may be any device that may support wired or wireless communication. For example, a program for abnormal diagnosis or various data (e.g., manufacturing specifications for battery components) may be transmitted to and received from a separately provided external server through the communication I/F 808.

Terms such as "include," "comprise," or "have" described above mean that the corresponding component may be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

## Claims

1. A battery image analysis device comprising:
an acquisition unit configured to acquire a first image of a battery including an electrode assembly and a case protecting the electrode assembly;
a target extraction unit configured to extract a target image corresponding to a target component among components of the battery included in the first image based on pixel values of a plurality of pixels included in the first image;
a centerline extraction unit configured to extract a centerline of the target component included in the target image; and
a calculation unit configured to extract coordinate data of each of the centerline and the case, and calculate a proportion of the case occupied by the electrode assembly based on the coordinate data of the centerline and the coordinate data of the case.

2. The battery image analysis device of claim 1, wherein the proportion includes at least one of an area proportion of an area of the electrode assembly corresponding to a first cross-section of the case relative to an area of the first cross-section and a volume proportion of a volume of the electrode assembly relative to a volume of the case.

3. The battery image analysis device of claim 1, wherein the target component includes a positive electrode included in the electrode assembly, and
the calculation unit calculates the proportion based on an outermost centerline corresponding to an outermost one of the positive electrode among the centerlines.

4. The battery image analysis device of claim 3, wherein the acquisition unit further acquires a distance between a negative electrode and the positive electrode of the battery, and
the calculation unit calculates the proportion based on the outermost centerline and the distance.

5. The battery image analysis device of claim 4, wherein the calculation unit is configured to:
specify a position of the negative electrode of the battery based on the outermost centerline and the distance;
extract coordinate data of the specified negative electrode; and
calculate the proportion based on the coordinate data of the negative electrode and the coordinate data of the case.

6. The battery image analysis device of claim 1, further comprising a diagnostic unit configured to diagnose a state of the battery based on the proportion.

7. A method of operating a battery image analysis device, the method comprising:
acquiring a first image of a battery including an electrode assembly and a case protecting the electrode assembly;
extracting a target image corresponding to a target component among components of the battery included in the first image based on pixel values of a plurality of pixels included in the first image;
extracting a centerline of the target component included in the target image; and
extracting coordinate data of each of the centerline and the case, and calculate a proportion of the case occupied by the electrode assembly based on the coordinate data of the centerline and the coordinate data of the case.

8. The method of claim 7, wherein the proportion includes at least one of an area proportion of an area of the electrode assembly corresponding to a first cross-section of the case relative to an area of the first cross-section and a volume proportion of a volume of the electrode assembly relative to a volume of the case.

9. The method of claim 7, wherein the target component includes a positive electrode included in the electrode assembly, and
the calculating of the proportion includes calculating the proportion based on an outermost centerline corresponding to an outermost one of the positive electrode among the centerlines.

10. The method of claim 9, further comprising acquiring a distance between a negative electrode and the positive electrode of the battery,
wherein the calculating of the proportion includes calculating the proportion based on the outermost centerline and the distance.

11. The method of claim 10, wherein the calculating of the proportion includes:
specifying a position of the negative electrode of the battery based on the outermost centerline and the distance;
extracting coordinate data of the specified negative electrode; and
calculating the proportion based on the coordinate data of the negative electrode and the coordinate data of the case.

12. The method of claim 7, further comprising diagnosing a state of the battery based on the proportion.
